# EUROPEAN PATENT SPECIFICATION

(11) **EP 1 683 714 B1**
(45) Date of publication and mention of the grant of the patent: **22.08.2007**
(21) Application number: 05001200.4
(22) Date of filing: 21.01.2005
(51) Int. Cl.: B62K 19/30, B62K 21/02, B62J 6/18

(54) **Structure of front fork and outer foot**
Vorderrad-Gabelstruktur
Structure de fourche avant

(43) Date of publication of application: 26.07.2006
(73) Proprietor: HL Corp (Shenzen) Co., Ltd., 518109 Longhua Town, Baoan District, Shenzhen (CN)
(72) Inventor: Liao, Hsueh-Hu HL Corp(Shenzen) Co.,Ltd., 518109 Longhua Town, Baoan Dist.,Shenzhen (CN)
(74) Representative: Vossius & Partner

(56) References cited:
- EP-A- 1 426 277
- EP-A- 1 506 916
- DE-A1- 19 712 326
- GB-A- 624 476
- PATENT ABSTRACTS OF JAPAN vol. 2003, no. 12, 5 December 2003 (2003-12-05) & JP 2004 306913 A (SONY CORP), 4 November 2004 (2004-11-04)

## Description

The present invention relates to a new type of front fork and outer foot (FFOF) structure for bicycles, such as conventional bicycles, electric bicycles, or motorcycles. Thus, it relates to any kind of front fork used in any kind of bicycle.

GB-A-624 476 relates to a frame for a bicycle or the like, being interiorly provided with conductors of the current for the electric lighting installation.

EP-A-1 426 277 relates to a protective cover for a bicycle conduit.

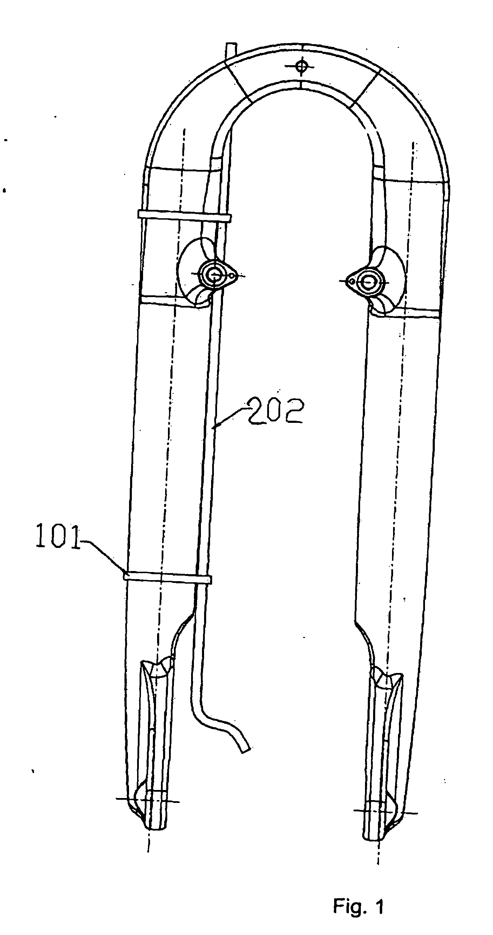

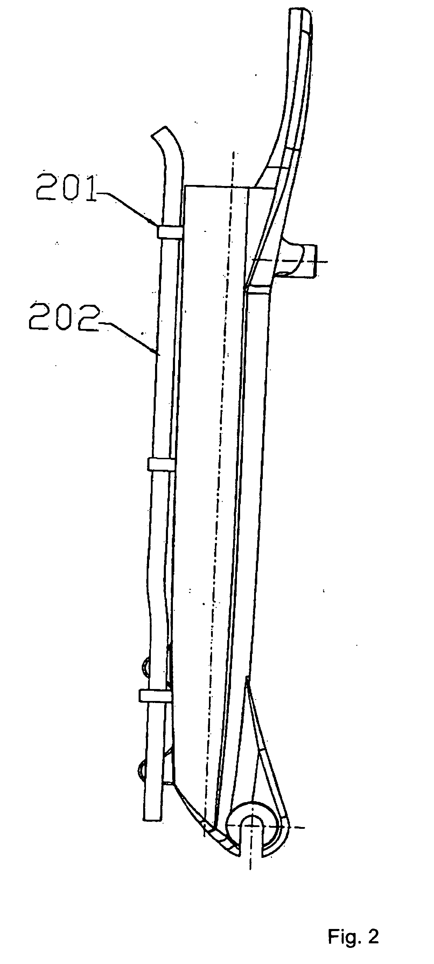

Typically, bicycles comprise front and rear lights or lamps, respectively, which are electric lights. The electric current for operating these electric lights is generated by means of a dynamo. Such dynamos are conventionally either provided in the front wheel hub, or as separate components mounted to the bicycle frame and can selectively be brought in contact with the tire. A conventional type of a FFOF structure is illustrated in Figs. 1 and 2. As can be taken from Fig. 1, a conventional FFOF structure comprises a wire or cable 202 coming from the generator/dynamo provided in the front wheel hub, and being then connected to the lights. As shown in Figs. 1 and 2, the wire is simply directly attached to the FFOF structure with one or more straps 101. Alternatively, as shown in Fig. 2, several holes 201 are drilled into the outer foot pipe to guide the wire 202 of the generator along the FFOF. However, the drilling of holes or the attachment of the wire 202 with straps 101 increases production cost and time. Moreover, holes 201 may result in an increase in instability of the FFOF during use.

The object of the present invention is to provide a simple, stable, and effective front fork and outer foot structure of a bicycle. This object is achieved with the features of the claims.

According to the present invention, the outer foot pipe of the FFOF structure comprises a long slot hole. Preferably, the long slot hole is provided inside of the outer foot pipe.

According to the present invention, the long slot hole is partial-blocked. In other words, the FFOF structure comprises an open channel (e.g., U-shaped) for accommodating the wire so that the long slot hole is not completely surrounded by a channel wall and thus only partial-blocked. That is, in this case the channel is open to the inside of the front fork. As an alternative, which is not in accordance with the present invention, the FFOF structure comprises a tubular channel (preferably having a circular cross-section) which means that the long slot hole is (fully)blocked, i.e., completely surrounded by the channel wall.

The FFOF structure of the present invention is advantageous in that it increases safety and stability of the FFOF during use, and reduces manufacturing cost due to a simplified design. Moreover, safety is increased since there is no longer the risk that the wire is accidentally cut or torn off.

The invention is now described in more detail with reference to the accompanying drawings, in which
- Fig. 1: shows a conventional FFOF structure;
- Fig. 2: shows another conventional FFOF structure;
- Fig. 3: shows a cross-sectional view of the FFOF structure according to the present invention;
- Fig. 4: shows a side view of the FFOF structure of Fig. 3;
- Fig. 5: shows a bottom view of the FFOF structure of Fig. 3; and
- Fig. 6: shows a top view of the FFOF structure of Fig. 3.

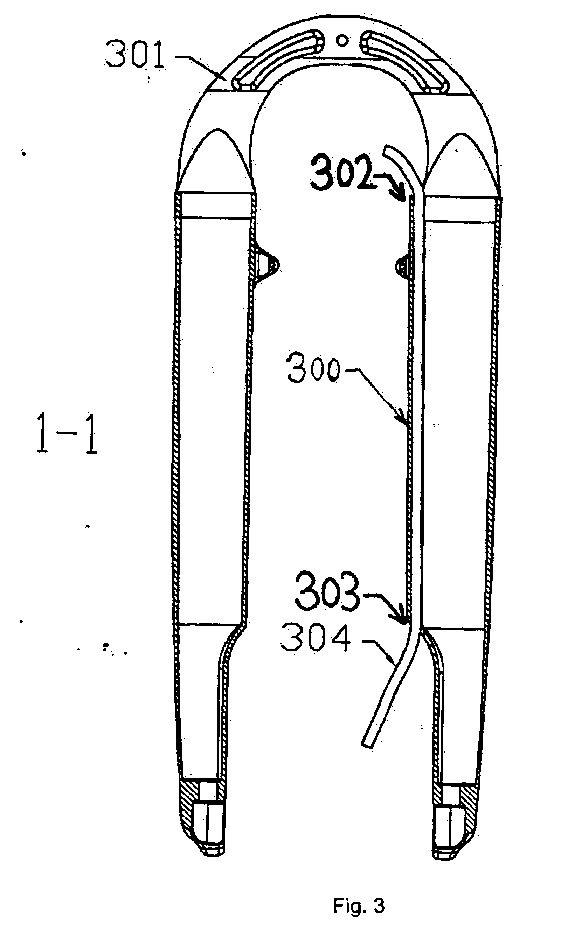

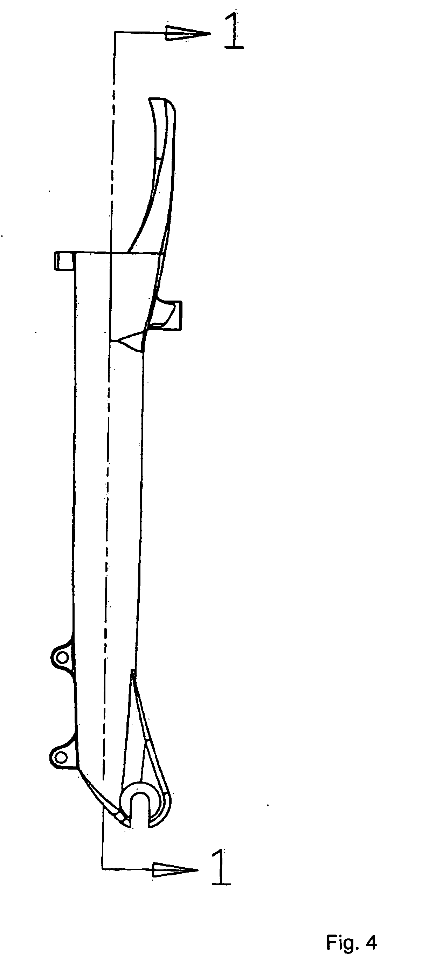

Figs. 3 to 6 show different views of the FFOF structure according to the present invention. As shown in Fig. 3, a long slot hole 300 is provided on the outer foot pipe for receiving the wire 304 from the dynamo (not shown). Wire 304 enters the long slot 300 at the oil seal 302 next to the rack 301, and exits through the long slot hole 300 at the bottom 303 of outer foot pipe.

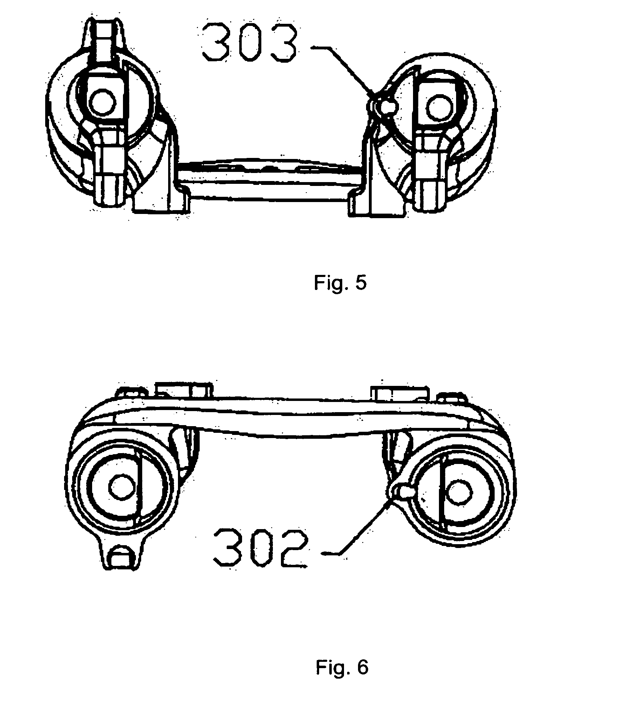

Fig. 5 which is a bottom view of the FFOF structure of Fig. 3 shows the opening of the slot at the bottom 303 of the outer foot pipe, and Fig. 6 which is a top view of the FFOF structure of Fig. 3 shows the opposite opening at oil seal 302. In the embodiment shown in Figs. 5 and 6, the long slot hole is only partial-blocked in the sense of the present invention. That is, the channel providing the long slot hole is approximately U-shaped and thus open to the inside of the front fork.

According to the present invention, the dynamo wire 304 is completely accommodated in the outer foot pipe of the FFOF structure. Additionally, there is no bulgy wire hole or wire strap necessary, which simplifies the manufacturing process, and makes it firm, stable, and safe.

## Claims

1. A bicycle front fork and outer foot structure, wherein the outer foot pipe comprises a long slot hole (300), wherein said slot hole (300) is formed by a U-shaped channel, and wherein said U-shaped channel is open to the inside of said front fork and outer foot structure.

2. The front fork and outer foot structure of claim 1, wherein said long slot hole (300) is provided inside said outer foot pipe.

3. The front fork and outer foot structure of claim1 or 2, wherein a first opening of said long slot hole is adjacent to the groove for the wheel hub.

4. The front fork and outer foot structure of claim 3, wherein a second opening is adjacent to the rack (301)

5. The front fork and outer foot structure of any of claims 1 to 4, wherein said long slot hole (300) extends along the length of the fork.

6. The front fork and outer foot structure of any of claims 1 to 4, wherein said long slot hole (300) is for accommodating the wire of the bicycle dynamo.

## Patentansprüche

1. Vorderrad-Gabelstruktur für ein Fahrrad, wobei das äußere Fußrohr ein langes Schlitzloch (300) umfasst, wobei das lange Schlitzloch (300) durch einen U-förmigen Kanal ausgebildet wird und wobei der U-förmige Kanal zur Innenseite der Vorderrad-Gabelstruktur offen ist.

2. Vorderrad-Gabelstruktur nach Anspruch 1, wobei das lange Schlitzloch (300) innerhalb des äußeren Fußrohrs angeordnet ist.

3. Vorderrad-Gabelstruktur nach Anspruch 1 oder 2, wobei eine erste Öffnung des langen Schlitzlochs zu der Nut für die Radnabe benachbart ist.

4. Vorderrad-Gabelstruktur nach Anspruch 3, wobei eine zweite Öffnung zum Gestell (301) benachbart ist.

5. Vorderrad-Gabelstruktur nach einem der Ansprüche 1 bis 4, wobei sich das lange Schlitzloch (300) entlang der Länge der Gabel erstreckt.

6. Vorderrad-Gabelstruktur nach einem der Ansprüche 1 bis 4, wobei das lange Schlitzloch (300) den Draht des Fahrraddynamos aufnimmt.

## Revendications

1. Structure de fourche avant et de pédalier externe de bicyclette, dans laquelle le tube de pédalier externe comprend un long trou en fente (300), dans laquelle ledit trou en fente (300) est formé par un canal en forme de U et dans laquelle ledit canal en forme de U débouche vers l'intérieur de ladite structure de fourche avant et de pédalier externe.

2. Structure de fourche avant et de pédalier externe selon la revendication 1, dans laquelle ledit long trou en fente (300) est ménagé à l'intérieur dudit tube de pédalier externe.

3. Structure de fourche avant et de pédalier externe selon la revendication 1 ou 2, dans laquelle une première ouverture dudit long trou en fente est adjacente à la rainure pour le moyeu de roue.

4. Structure de fourche avant et de pédalier externe selon la revendication 3, dans laquelle une seconde ouverture est adjacente à la crémaillère (301).

5. Structure de fourche avant et de pédalier externe selon l'une quelconque des revendications 1 à 4, dans laquelle ledit long trou en fente (300) s'étend sur la longueur de la fourche.

6. Structure de fourche avant et de pédalier externe selon l'une quelconque des revendications 1 à 4, dans laquelle ledit long trou en fente (300) est conçu pour recevoir le fil métallique de la dynamo de la bicyclette.
